## Europäisches Patentamt
## European Patent Office
## Office européen des brevets

(19)

(11) Numéro de publication: **0 139 559**
**B1**

(12) # FASCICULE DE BREVET EUROPÉEN

(45) Date de publication du fascicule du brevet:
**10.06.87**

(51) Int. Cl.⁴: **G 21 C 17/00**

(21) Numéro de dépôt: **84401789.7**

(22) Date de dépôt: **11.09.84**

(54) **Procédé de contrôle des fuites du circuit d'un réacteur nucléaire à eau sous pression.**

(30) Priorité: **13.09.83 FR 8314509**

(43) Date de publication de la demande:
**02.05.85 Bulletin 85/18**

(45) Mention de la délivrance du brevet:
**10.06.87 Bulletin 87/24**

(84) Etats contractants désignés:
**BE CH DE GB IT LI SE**

(56) Documents cité:
**FR-A-2 214 992**
**US-A-3 644 172**
**US-A-3 712 850**

(73) Titulaire: **FRAMATOME ET CIE., Tour Fiat 1, Place de la Coupole, F-92400 Courbevoie (FR)**

(72) Inventeur: **Le Rat, Guy, 10 cours des Petites Ecuries, F-77200 Torcy (FR)**
Inventeur: **Vivet, Stéphane, 100 D avenue Jean Jaurès, F-92290 - Chatenay- Malabry (FR)**

(74) Mandataire: **Bressand, Georges, c/o CABINET LAVOIX 2 Place d'Estienne d'Orves, F-75441 Paris Cedex 09 (FR)**

EP 0 139 559 B1

## Description

L'invention concerne un procédé de contrôle des fuites du circuit primaire d'un réacteur nucléaire à eau sous pression.

Le circuit primaire des réacteurs nucléaires refroidis par de l'eau sous pression correspond à la partie de ce réacteur qui contient l'eau sous pression de refroidissement du coeur du réacteur. Ce circuit primaire comporte donc la cuve du réacteur qui renferme le coeur, la partie primaire des générateurs de vapeur, le volume interne du pressuriseur ainsi que des canalisations de circulation de l'eau sous pression reliant chacun des générateurs de vapeur à la cuve de façon indépendante, chacune des parties du circuit comportant un générateur de vapeur et un ensemble de canalisations reliés à la cuve constituant une boucle du circuit primaire. Le circuit primaire est également relié à des circuits auxiliaires dont le circuit de contrôle volumétrique et chimique de l'eau sous pression. Ce circuit auxiliaire disposé en dérivation sur le circuit primaire permet à la fois de maintenir la quantité d'eau dans le circuit primaire par appoint éventuel de quantités dosées d'eau et de contrôler les caractéristiques chimiques de l'eau de refroidissement, en particulier sa teneur en acide borique qui intervient dans la conduite du réacteur. Pendant les phases où l'on ajuste les caractéristiques chimiques de l'eau du réacteur, on peut être amené à effectuer des soutirages ou des injections dans le circuit primaire, les quantités prélevées ou injectées étant connues et contrôlées de façon très précise.

En dehors de ces périodes d'injections ou de soutirages, les vannes de raccordement des circuits auxiliaires autres que le circuit de contrôle volumétrique et chimique avec le circuit primaire sont fermées. Le circuit primaire est alors théoriquement isolé et totalement étanche, si bien que la quantité d'eau dans ce circuit primaire est théoriquement constante. Cependant, dans la pratique, on s'aperçoit que cette quantité d'eau de refroidissement diminue au cours du fonctionnement du réacteur, à cause de fuites inévitables qui peuvent être contrôlées et parfaitement évaluées ou au contraire non contrôlées. Les fuites non contrôlées peuvent elles-mêmes être localisées ou non localisées et, dans ce dernier cas, l'évaluation de l'amplitude de ces fuites est particulièrement difficile.

Il est cependant très important de bien connaître le taux de fuite du circuit primaire, pour entreprendre des actions préventives avant que des fuites accidentelles ne s'aggravent et ne mettent en cause la sécurité de fonctionnement du réacteur nucléaire.

On a proposé différents procédés pour détecter des fuites dans un circuit fermé. On a par exemple proposé d'utiliser des détecteurs acoustiques pour indiquer la présence d'une fuite supérieure à une valeur limite en un point du circuit. Ce procédé ne permet cependant pas d'évaluer l'ensemble des fuites du circuit et les indications données ne sont pas réellement quatitatives.

On a également proposé, dans le brevet français FR-A-2.214.992, un procédé utilisant un contrôle de niveau dans un vase d'expansion disposé sur le circuit et une mesure de la température du fluide dans le circuit fermé. Si les variations de niveau dans le vase d'expansion ne sont pas compatibles avec la variation de la température moyenne du fluide, on en déduit que les variations de niveau sont dues à des fuites. Un appoint en liquide est donc fait dans le vase d'expansion jusqu'au moment où le niveau revient à un niveau prédéterminé fonction de la température moyenne du fluide. Ce procédé qui permet de détecter la présence de fuites ne permet cependant pas de les évaluer quantitativement de façon exacte.

Dans le brevet américain US-A-3.712.750, on décrit un procédé de détection des fuites dans le circuit de refroidissement du circuit primaire d'un réacteur nucléaire. Les fuites sont collectées dans un puisard sous la cuve du réacteur et le liquide de fuite recueilli s'évapore dans le bâtiment de sécurité du réacteur. Lors du traitement avant recyclage de l'air du bâtiment du réacteur, on mesure les traces de tritium éventuellement présentes dans la vapeur d'eau contenue dans cet air. On peut également mesurer directement la radio-activité de l'air du bâtiment réacteur.

Ce procédé qui permet de déterminer les fuites de façon plus ou moins quantitative est cependant d'une grande complexité de mise en oeuvre.

Le but de l'invention est donc de proposer un procédé de contrôle des fuites du circuit primaire d'un réacteur nucléaire à eau sous pression comportant une cuve renfermant le coeur du réacteur, au moins deux générateurs de vapeur reliés à la cuve de façon indépendante par des canalisations de circulation d'eau sous pression, un pressuriseur, au moins un circuit auxiliaire de contrôle volumétrique et chimique appoint de l'eau sous pression et des réservoirs intercalés sur le circuit primaire et sur le circuit auxiliaire, ce procédé de contrôle permettant une détermination quantitative des fuites totales du circuit primaire avec une très bonne précision et en utilisant uniquement des moyens de mesure classiques et faciles à mettre en ouvre.

Dans ce but,
- on détermine en fonction des caractéristiques du circuit primaire, un découpage du volume interne du circuit primaire et du circuit de contrôle volumétrique et chimique, à l'exclusion des réservoirs, en un ensemble de volumes élémentaires dans lesquels la température et la pression de l'eau sont égales en tout point du volume élémentaire avec une marge d'erreur prédéterminée pendant le fonctionnement du réacteur,
- à des intervalles de temps fixes appelés "pas", pendant le fonctionnement du réacteur:
- on mesure le niveau de l'eau sous pression à l'intérieur de chacun des réservoirs,
- on mesure la pression et la température de l'eau sous pression dans chacun des volumes élémentaires,
- on calcule la masse d'eau dans chacun des réservoirs et dans chacun des volumes élémentaires, en fonction des températures, pressions et niveaux mesurés,
- on calcule la masse d'eau totale dans le circuit primaire par addition des masses d'eau dans les volumes élémentaires et dans les réservoirs, et sur des périodes de temps correspondant à un multiple du pas et décalées d'au moins un pas,
- on calcule la moyenne des masses d'eau du circuit primaire et la différence des valeurs moyennes correspondant à deux périodes de temps successives, représentative du débit de fuite du circuit primaire,

Afin de bien faire comprendre l'invention, on va décrire, à titre d'exemple non limitatif, en se référant aux figures jointes en annexe, un exemple de mise en oeuvre du procédé suivant l'invention.

La figure 1 représente le circuit primaire d'un réacteur nucléaire à eau sous pression.

La figure 2 représente le circuit de contrôle volumétrique et chimique associé au circuit primaire de ce réacteur.

La figure 3 est un diagramme montrant les périodes de temps sur lesquelles on effectue les calculs de fuite.

La figure 4 est un diagramme montrant comparativement les fuites réelles et calculées par la méthode suivant l'invention, pendant le fonctionnement d'un réacteur nucléaire à eau sous pression.

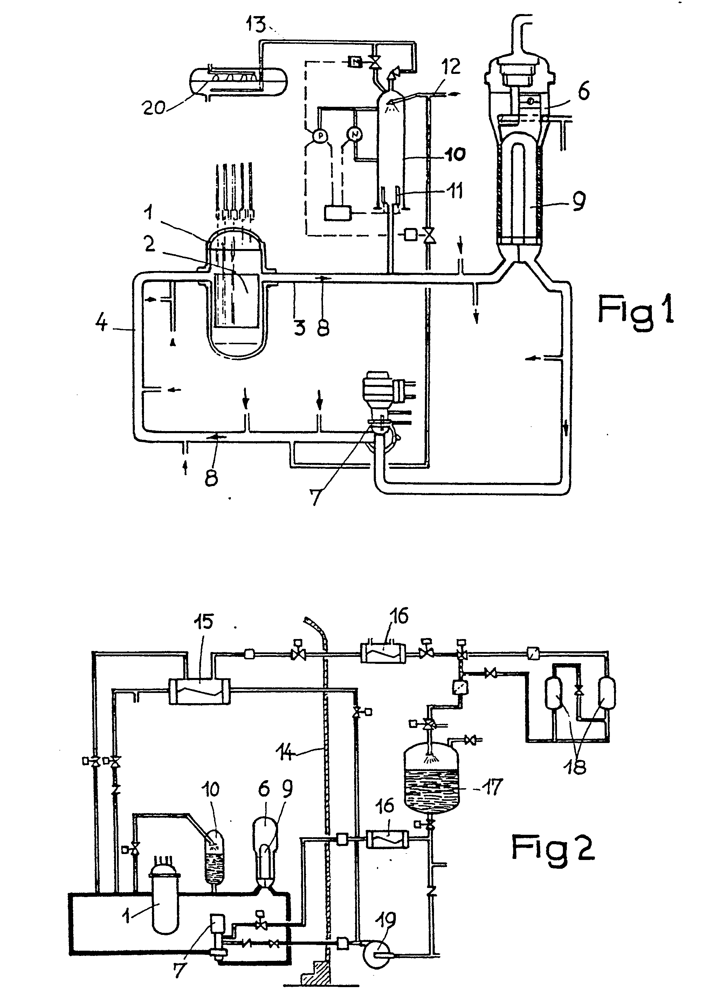

Sur la figure 1, on voit une boucle d'un circuit primaire d'un réacteur nucléaire à eau sous pression. Le réacteur nucléaire comporte une cuve 1 renfermant le coeur 2 du réacteur et reliée par des canalisations 3 et 4 à un générateur de vapeur 6 et à une pompe primaire 7 permettant la mise en circulation de l'eau sous pression à l'intérieur des canalisations 3 et 4 suivant la direction des flèches 8.

La canalisation 3 recevant l'eau sous pression à haute température sortant du coeur constitue la branche chaude du réacteur alors que la conduite 4, assurant le retour de l'eau sous pression à la cuve 1, après son passage dans le générateur de vapeur 6, constitue la branche froide du circuit primaire.

Le générateur de vapeur 6 comporte un faisceau 9 à l'intérieur duquel circule l'eau sous pression pour l'échauffement de l'eau d'alimentation du générateur de vapeur qui est échauffée puis vaporisée avant d'être envoyée à la turbine de la centrale nucléaire.

Sur la figure 1 on a représenté la boucle du circuit primaire sur laquelle se trouve le pressuriseur 10 qui assure la régulation de pression dans le circuit primaire. Pour celà des éléments de chauffage électrique 11 pénètrent par la partie inférieure du pressuriseur. Une aspersion auxiliaire 12 et un dispositif de décharge 13 du pressuriseur permettent de ramener l'eau à sa pression nominale en cas de dépassement.

Sur la figure 2, on voit le circuit de contrôle volumétrique et chimique (RCV) du réacteur nucléaire branché en dérivation sur une des boucles de ce réacteur identique à la boucle représentée sur la figure 1.

Une partie du circuit de contrôle volumétrique et chimique se trouve à l'extérieur du bâtiment de sécurité du réacteur 14, la partie disposée à l'intérieur du bâtiment de sécurité 14 comportant un échangeur de chaleur 15 pour refroidir et dépressuriser le fluide primaire avant sa sortie du bâtiment 14.

Le circuit RCV comporte, à l'extérieur du bâtiment 14, des échangeurs de chaleur refroidisseurs 16, un réservoir d'appoint 17 et des unités de déminéralisation 18. Une pompe de charge 19 permet de faire circuler le fluide à l'intérieur du circuit RCV.

Un ensemble de vannes permet d'isoler le circuit RCV du circuit primaire, lorsqu'il n'est pas en service.

Pour la mise en oeuvre du procédé suivant l'invention, il est nécessaire de déterminer, pour tout le volume interne du circuit primaise à l'exception des réservoirs qui se trouvent sur celui-ci, un découpage en volumes élémentaires choisis de façon qu'à l'intérieur de ces volumes élémentaires, la température et la pression soient suffisamment uniformes pour que les calculs de masses d'eau ultérieurs soient significatifs. En réalité, les volumes élémentaires sont choisis de façon que la température et la pression soient égales en tout point du volume élémentaire, compte tenu d'une marge d'erreur acceptable prédéterminée qui permet d'effectuer des calculs de masse d'eau avec une erreur maximum acceptable.

La connaissance de la répartition des température et pression dans le circuit primaire d'un réacteur à eau sous pression, par exemple un réacteur nucléaire à trois boucles de puissance électrique 900 MW a permis de déterminer dix-neuf volumes élémentaires à l'intérieur du circuit primaire, à l'intérieur desquels la température et la pression restent suffisamment homogènes et constantes au cours du fonctionnement du réacteur. On prend en compte également les trois réservoirs en communication avec le circuit primaire, à savoir le réservoir de décharge du pressuriseur 20 (figure 1), le réservoir de recueil des fuites localisées du circuit primaire et le réservoir de stockage pour le traitement des effluents primaires.

En ce qui concerne le circuit auxiliaire RCV représenté à la figure 2, on découpe son volume interne en trois volumes élémentaires et l'on prend en compte le réservoir 17 permettant le contrôle volumétrique du circuit primaire.

Pour chacun des volumes élémentaires ou réservoirs, on mesure avec une certaine

périodicité, pendant le fonctionnement du réacteur, la température et la pression de l'eau dans le volume élémentaire ou réservoir considéré. En ce qui concerne les réservoirs, on mesure de plus le niveau de l'eau dans ce réservoir avec la même périodicité.

Enfin, on recueille en plus des signaux représentatifs des mesures de niveaux de pression et de température, des signaux décrivant l'étant d'ouverture ou de fermeture des vannes du circuit primaire et du circuit auxiliaire pour connaître les débits éventuels d'eau venant en déduction ou en supplément de la masse d'eau du circuit primaire au moment de la mesure.

La mesure des paramètres envisagés ci-dessus permet de calculer les masses d'eau dans les réservoirs et dans les volumes élémentaires du circuit primaire et du circuit auxiliaire au moment de la mesure.

De façon pratique on dispose des capteurs de pression et de température au niveau de chacun des volumes élémentaires et des réservoirs ainsi que des capteurs de niveau dans chacun des réservoirs. Ces capteurs envoient les résultats de la mesure sous forme de signaux à une unité centrale de calcul qui effectue la détermination de la maase d'eau en utilisant des tables d'eau mises en mémoire.

Le calcul doit prendre en compte l'eau sous forme liquide et l'eau sous forme de vapeur à l'intérieur de chacun des volumes déterminés.

Par exemple dans le cas du pressuriseur, on considère un volume unique à l'interieur duquel l'eau et la vapeur sous pression sont en équilibre. Le volume en eau comporte le fond du pressuriseur et le volume cylindrique de la colonne d'eau surmontant celui-ci.

Le volume de vapeur dans le pressuriseur comporte le volume cylindrique total du pressuriseur moins le volume correspondant à la colonne d'eau et le volume de la partie supérieure bombée du pressuriseur.

Le niveau dans le pressuriseur est donc mesuré, comme dans le cas des réservoirs, pour le calcul de la masse d'eau.

Le volume intérieur primaire des générateurs de vapeur est constitué par la somme des volumes intérieurs des tubes du faisceau.

Le volume de chaque branche froide du réacteur est constitué par le volume de la boite à eau du côté de la sortie de l'eau dans le générateur de vapeur, par le volume de la pompe primaire et le volume des canalisations reliant la pompe primaire au générateur de vapeur et à la cuve, le volume des tuyauteries de contournement et le volume des tuyauteries d'aspersion du pressuriseur.

En ce qui concerne le circuit de contrôle volumétrique et chimique du réacteur, son volume est faible par rapport au volume du circuit primaire, si bien que les disparités de température dans ce circuit ont une influence faible sur le calcul final de la masse d'eau et du taux de fuite. On choisit donc un découpage en trois volumes élémentaires seulement de ce circuit RCV.

Le principe de détermination de la masse d'eau repose sur le calcul du volume renfermant cette eau en fonction de la pression et de la température mesurée. On obtient le volume élémentaire à la pression P et à la température T de service du réacteur par la formule:

$$V_i (P_i T_i) = V_i \text{ froid} (1 + \alpha_i T_i + x_i P_i)$$

où

$V_i (P_i T_i)$ = volume élémentaire à la pression P et température T de service du réacteur

$V_i$ froid = volume élémentaire à froid

$\alpha_i$ = coefficient de dilatation du volume élémentaire i

$x_i$ = coefficient de compressibilité pour le volume élémentaire i

Les tables d'eau mises en mémoire dans le calculateur permettent de disposer de la masse volumique de l'eau aux pression et température correspondant aux pression et température du volume élémentaire i. La masse d'eau renfermée dans chaque volume élémentaire est donc calculée en multipliant le volume élémentaire $V_i$ ($P_i$, $T_i$) par la masse volumique de l'eau à la température T et à la pression P.

Dans les parties plus complexes comme le coeur du réacteur et les générateurs de vapeur, une modélisation de la température a été faite de façon à approcher l'intégrale portant sur le volume élémentaire i $\iint V_i \rho (T_i P_i) dV_i$ par une expression du type $V_i (T \text{ moy.}i, P_i) \rho (T \text{ moy.}i, P_i)$.

En ce qui concerne les réservoirs et le pressuriseur, on prend en compte le niveau mesuré dans le réservoir pour déterminer le volume d'eau dans celui-ci. On a mis en mémoire dans le calculateur, la relation entre le niveau et le volume renfermé par le réservoir, pour permettre ce calcul.

La périodicité d'acquisition des différents paramètres, pression, température, niveau, peut être un peu différente et le calcul sera effectué avec une périodicité, ou pas, égale ou un peu supérieure à la périodicité maximum d'acquisition des paramètres mesurés.

Dans le cas d'un réacteur nucléaire à trois boucles envisagé ci-dessus, le pas est de vingt secondes et le calculateur permet de disposer d'une valeur précise des masses d'eau dans chacun des volumes élémentaires et réservoirs toutes les vingt secondes. Le calculateur effectue la somme de ces valeurs élémentaires de la masse d'eau pour connaître la masse d'eau totale instantanée dans le circuit primaire.

En ce qui concerne la cuve du réacteur, on distingue les volumes élémentaires suivants:

- Le volume de la cuve côté froid constitué par le volume d'entrée de l'eau venant des branches froides et le volume mort occupé par l'eau avant son passage dans le coeur.

- Le volume du coeur disponible pour le passage de l'eau.

- Le volume de la partie supérieure de la cuve ou plenum.

- Enfin, les trois volumes correspondant aux branches chaudes et déterminés comme indiqué ci-dessus.

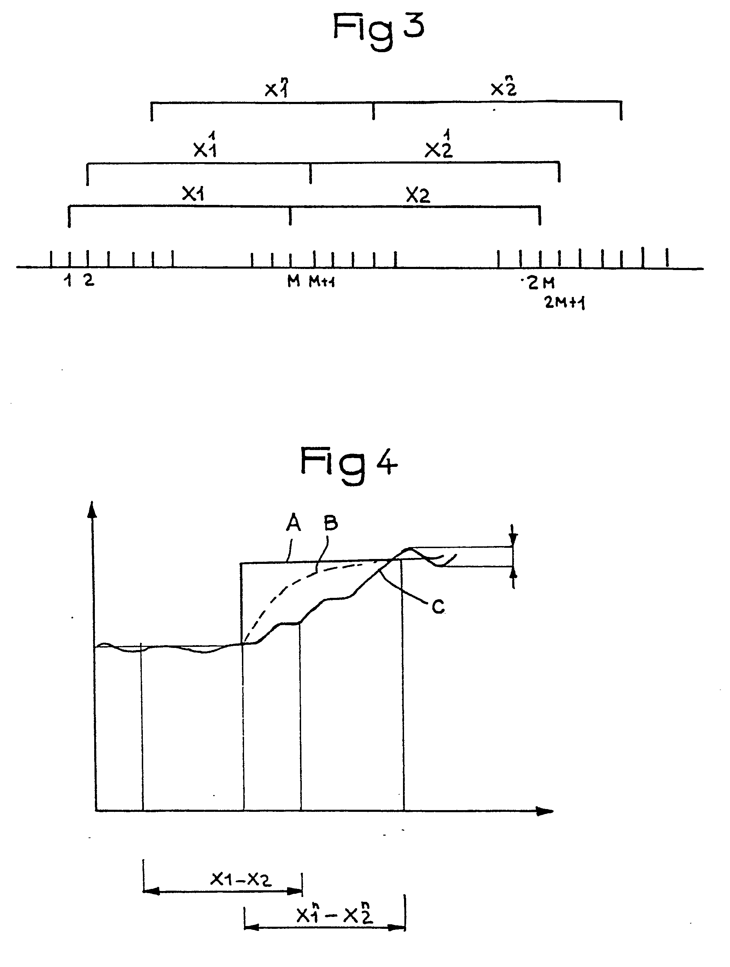

Sur la figure 3, on voit le principe de calcul des masses d'eau dans le circuit primaire au cours du temps.

Sur la ligne inférieure du diagramme, on a représenté avec une graduation par pas de vingt secondes l'échelle des temps. Chacune des graduations 1, 2, ... m, m + 1,... représentent l'instant d'acquisition d'une valeur de la masse d'eau dans le circuit primaire.

Les lignes supérieures du diagramme représentent des périodes de temps X1, X2, ... représentant un nombre entier de pas de vingt secondes.

On a choisi pour la détermination de la masse d'eau et du taux de fuite du réacteur dans l'exemple mentionné ci-dessus, une période de temps égale à trente minutes c'est-à-dire à quatre-vingt dix pas de vingt secondes.

Chacune des périodes X1, X2,... représente donc trente minutes ou quatre-vingt dix pas.

La masse totale moyenne d'eau dans le circuit primaire pendant une période X quelconque de quatre-vingt dix pas est égale à la somme des quatre-vingt dix valeurs de la masse totale déterminée à chacun des pas divisée par quatre-vingt dix.

Ce calcul de la valeur moyenne est effectué non seulement pour les périodes successives de trente minutes X1, X2,... mais également pour des périodes de même durée décalées d'un pas (X1$_1$, X1$_2$,...) ou d'un nombre quelconque de pas (Xn$_1$, Xn$_2$, ...) et inférieur à quatre-vingt dix.

On détermine ainsi des couples de valeurs moyennes sur des périodes X1 X2, X1$_1$ X1$_2$, Xn$_1$ Xn$_2$, successives et d'une durée fixe de trente minutes.

Le calculateur détermine la différence entre ces valeurs moyennes au cours de deux périodes successives de trente minutes, ce qui donne une valeur du débit de fuite à un instant donné caractérisé par un certain nombre de pas.

La valeur du débit de fuite au pas suivant sera déterminée par la différence des valeurs moyennes calculées sur des périodes décalées d'un pas par rapport aux périodes précédentes (X1$_1$ et X1$_2$).

A chaque pas on calculera donc une valeur du débit de fuite égale à la différence entre les valeurs moyennes des masses d'eau dans le circuit primaire calculées sur deux périodes successives de quatre-vingt dix pas.

Sur la figure 4 on a représenté, dans le cas d'une variation brusque représentée de façon théorique par la courbe A, la courbe C correspondant aux valeurs du débit de fuite obtenu par le procédé suivant l'invention.

On voit que la valeur calculée du débit de fuite augmente d'une façon progressive jusqu'au moment où elle s'équilibre à une valeur oscillant autour de la nouvelle valeur théorique du débit de fuite. En effet, les résultats du calcul tiennent compte des valeurs de la masse sur des périodes antérieures à la variation brusque du taux de fuite.

Lorsque les fuites sont établies à leur nouvelle valeur, on connait cependant le niveau du débit de fuite avec une très bonne précision qui est de l'ordre de quelques litres par heure dans le cas de l'application à un réacteur nucléaire à trois boucles envisagée ci-dessus qui fonctionne en régime stable avec un débit de fuites moyen de l'ordre de 100 l/h

En fait, la variation réelle des fuites ne suit jamais une courbe théorique telle que représentée en A sur la figure 4 mais plutôt une variation telle que représentée en B, progressive au cours du temps.

On voit donc que le procédé suivant l'invention permet de calculer avec une très bonne précision le débit de fuite total du circuit primaire du réacteur sans avoir recours à d'autres mesures que des mesures de niveau, de température et de pression dans ce circuit.

La valeur des fuites non contrôlées peut être obtenue en retranchant de la valeur des fuites totales, la valeur moyenne des fuites contrôlées sur la période correspondant au calcul des fuites totales.

Il est bien évident que l'invention ne se limite pas au mode de réalisation qui vient d'être décrit mais qu'elle en comporte au contraire toutes les variantes supportées par les revendications.

C'est ainsi que le découpage du circuit primaire et la finesse de la modélisation peut être réalisé d'une façon différente de celle qui a été décrite, en fonction des caractéristiques de ce circuit primaire et de la variation de la température et de la pression de l'eau dans ces différentes parties.

De la même façon, étant donnée une périodicité d'acquisition des données nécessaires au calcul de la masse d'eau, il est possible de constituer des périodes pour le calcul de la moyenne de cette masse d'eau correspondant à un nombre de pas quelconque d'acquisition des données.

Cependant, la période de calcul de la valeur moyenne ne doit pas descendre en-dessous d'une certaine valeur pour que l'évaluation du débit de fuite soit faite avec une précision suffisante.

Dans le cas d'un réacteur nucléaire à trois boucles et d'un mode de découpage et de calcul tels que décrits ci-dessus, il est nécessaire de choisir une période de temps M supérieure à dix minutes.

L'invention s'applique à tout type de circuit primaire d'un réacteur nucléaire à eau sous pression auquel est associé un ou plusieurs circuits auxiliaires tels qu'un circuit de contrôle volumétrique et chimique.

## Revendications

1.- Procédé de contrôle des fuites du circuit primaire d'un réacteur nucléaire à eau sous pression comportant une cuve (1) renfermant le coeur (2) du réacteur, au moins deux générateurs de vapeur (6) reliés à la cuve de façon indépendante par des canalisations (3, 4) de circulation d'eau sous pression un pressuriseur (10), au moins un circuit auxiliaire de contrôle volumétrique et chimique et d'appoint de l'eau sous pression et des réservoirs (20, 17) intercalés sur le circuit primaire et sur le circuit auxiliaire,
caractérisé par le fait:
- qu'on détermine, en fonction des caractéristiques du circuit primaire, un découpage du volume interne du circuit primaire et du circuit de contrôle volumétrique et chimique, à l'exclusion des réservoirs (20, 17), en un ensemble de volumes élémentaires dans lesquels la température et la pression de l'eau sont égales en tout point du volume élémentaire avec une marge d'erreur prédéterminée, pendant le fonctionnement du réacteur,
- qu'à des intervalles de temps fixes appelés "pas", pendant le fonctionnement du réacteur:
- on mesure le niveau de l'eau sous pression à l'intérieur de chacun des réservoirs (20, 17),
- on mesure la pression et la température de l'eau sous pression dans chacun des volumes élémentaires et réservoirs,
- on calcule la masse d'eau dans chacun des réservoirs et dans chacun des volumes élémentaires, en fonction des températures, pressions et niveaux mesurés,
- on calcule la masse d'eau totale dans le circuit primaire par addition des masses d'eau dans les volumes élémentaires et dans les réservoirs, et que, sur des périodes de temps correspondant à un multiple du pas et décalées dans le temps d'au moins un pas, on calcule la moyenne des masses d'eau du circuit primaire et la différence des valeurs moyennes correspondant à deux périodes de temps successives, représentative du débit de fuite du circuit primaire.

2.- Procédé de contrôle des fuites suivant la revendication 1, caractérisé par le fait qu'on enregistre l'état d'ouverture ou de fermeture des vannes du circuit primaire et du circuit auxiliaire, pour tenir compte des débits éventuels d'eau pouvant augmenter ou diminuer la masse d'eau du circuit primaire.

**Patentansprüche**

1. Verfahren zur Lecküberwachung im Primärkreis eines Druckwasserkernreaktors mit einem Behälter (1), der den Kern (2) des Reaktors umschließt, mindestens zwei Dampfgeneratoren (6), die unabhängig voneinander mit dem Behälter über Druckwasserleitungen (3,4) verbunden sind, einem Druckerzeuger (10) und mindestens einem Hilfskreis zur chemischen und volumetrischen Überwachung und als Reserve von Druckwasser und mit Sammelbehältern (20,17), die zwischen dem Primärkreis und dem Hilfskreis angeordnet sind,
dadurch gekennzeichnet, daß in Abhängigkeit von charakteristischen Eigenschaften des Primärkreises eine Aufteilung des inneren Volumens des Primärkreises und des Kreises zur chemischen und volumetrischen Überwachung mit Ausnahme der Sammelbehälter (20,17) bestimmt wird, in eine Gruppe von Elementarvolumen, in denen die Temperatur und der Druck des Wassers an jeder Stelle des Elementarvolumens mit einer vorbestimmten Fehlermarge während des Betriebs des Reaktors gleich sind,
- in zeitlich festen Intervallen, "Schritte" genannt, während des Betriebs des Reaktors:
- der Druckwasserpegel im Inneren eines jeden Sammelbehälters (20, 17) gemessen wird,
- der Druck und die Temperatur des Druckwassers in jedem Elementarvolumen und den Sammelbehältern gemessen wird,
- die Wassermasse in jedem der Sammelbehälter und in jedem der Elementarvolumen in Abhängigkeit von den Temperaturen, den Drücken und den gemessenen Pegeln berechnet wird, und
- die Gesamtwassermasse im Primärkreis durch Addieren der Wassermassen in den Elementarvolumina und in den Sammelbehältern berechnet wird und in Zeitintervallen, die einem Vielfachen eines Schritts entsprechen und um mindestens einen Schritt versetzt die Mittelwerte der Wassermassen des Primärkreises und die Differenz der Mittelwerte, die zwei aufeinanderfolgenden Zeitperioden entsprechen berechnet werden, die den Leckdurchfluß des Primärkreises wiedergeben.

2. Verfahren zur Lecküberwachung nach Anspruch 1,
dadurch gekennzeichnet,
daß der Öffnungs- bzw. Schließzustand der Ventile des Primärkreises und des Hilfskreises aufgezeichnet werden um den eventuellen Durchflüssen Rechnung zu tragen, die die Wassermasse des Primärkreises steigen bzw. sinken lassen können.

**Claims**

1. A process for the monitoring of leaks from the primary circuit of a pressurized water nuclear reactor comprising a vessel (1) enclosing the reactor core (2), at least two steam generators (6) connected independently to the vessel by pipework (3, 4) for circulating water under pressure, a pressurizer (10), at least one auxiliary circuit for the volumetric and chemical monitoring and the replenishment of the pressurized water and stocktanks (20, 17) inserted in the primary circuit and in the auxiliary circuit, characterized by the fact that:
- a sectioning of the internal volume of the primary circuit and of the circuit for volumetric and chemical monitoring, excluding the stocktanks (20, 17) is determined as a function of the characteristics of the primary circuit, into a set of volume elements in which the temperature and the pressure of the water are equal at any point of the volume element with a predetermined margin of error, during the operation of the reactor,

- at fixed intervals of time, called "steps", during the operation of the reactor:

- the level of the pressurized water is measured inside each of the stocktanks (20, 17),

- the pressure and the temperature of the pressurized water are measured in each of the volume elements and stocktanks,

- the mass of water in each of the stocktanks and in each of the volume elements is calculated as a function of the measured temperatures, pressures and levels,

- the total mass of water in the primary circuit is calculated by addition of the masses of water in the volume elements and in the stocktanks, and, over periods of time corresponding to a multiple of the step and offset in time by at least one step, the mean of the masses of water in the primary circuit and the difference in the mean values corresponding to two successive periods of time are calculated, the difference representing the leakage flow of the primary circuit.

2. The process for monitoring leaks as claimed in claim 1, characterized by the fact that the state of opening or closing of the valves in the primary circuit and in the auxiliary circuit is recorded to take account of possible flows of water capable of increasing or reducing the mass of water in the primary circuit.

Fig 1

Fig 2

# Fig 3

$X_1^n$  $X_2^n$

$X_1^1$  $X_2^1$

$X_1$  $X_2$

1 2    M M+1    ·2M
                2M+1

# Fig 4

A  B

C

$X_1-X_2$

$X_1^n - X_2^n$

3